# FASCICULE DE BREVET EUROPEEN

(11) **EP 3 245 843 B1**
(45) Date de publication et mention de la délivrance du brevet: **02.01.2019**
(21) Numéro de dépôt: 16700722.8
(22) Date de dépôt: 15.01.2016
(51) Int. Cl.: H04W 88/06

(54) **PROCÉDÉ DE GESTION DES INTERFÉRENCES**
INTERFERENZVERWALTUNGSVERFAHREN
METHOD FOR MANAGING INTERFERENCE

(30) Priorité: 16.01.2015 FR 1550350
(43) Date de publication de la demande: 22.11.2017
(73) Titulaire: Sagemcom Broadband SAS, 92500 Rueil-Malmaison (FR)
(72) Inventeur: DANGY-CAYE, Nicolas, 92500 Rueil Malmaison (FR); TRICAUD, Laurent, 92500 Rueil Malmaison (FR); LALAM, Massinissa, 92500 Rueil Malmaison (FR)
(74) Mandataire: Cabinet Le Guen Maillet
(86) Numéro de dépôt international: PCT/EP2016/050711
(87) Numéro de publication internationale: WO 2016/113370

(56) Documents cités:
- EP-A2- 1 838 040
- US-A1- 2009 143 056

## Description

La présente invention concerne un procédé, un dispositif et un système de gestion des interférences générées par le fonctionnement simultané d'un réseau sans fil utilisant l'étalement de spectre par saut de fréquence et d'un réseau sans fil utilisant une technique d'étalement de spectre.

La coexistence des systèmes de communication sans fil utilisant conjointement les normes Bluetooth et Wi-Fi 2.4GHz est un problème connu depuis longtemps. En effet, la transmission radio basée sur un spectre étalé (*Spread Spectrum* en anglais) par les deux normes au sein de la même bande de fréquences ISM à 2.4GHz pose des problèmes d'interférences.

Ainsi, une transmission pour la norme Bluetooth par étalement de spectre par saut de fréquence (FHSS acronyme du terme anglais *Frequency Hopping Spread Spectrum*) est perçue comme du bruit pour un récepteur Wi-Fi 2.4GHz. La norme Wi-Fi opérée dans la bande des 2.4GHz utilise une technique d'étalement de spectre à séquence directe (DSSS acronyme du terme anglais *Direct Sequence Spread Spectrum*) et un procédé de modulation par répartition en fréquences orthogonales (OFDM acronyme du terme anglais *Orthogonal Frequency Division Multiplexing*).

De même, une transmission selon la norme Wi-Fi 2.4GHz est perçue comme du bruit pour un récepteur Bluetooth.

Des solutions existent actuellement pour pallier ce problème, notamment lorsque ces deux technologies sont intégrées dans un même dispositif. Ces solutions sont par exemple basées sur une isolation temporelle et/ou fréquentielle et/ou spatiale des signaux radio émis selon les différentes normes. Ces solutions ne sont toutefois pas adaptées pour des systèmes comportant deux dispositifs physiquement distincts et pouvant être plus ou moins éloignés l'un de l'autre de par l'absence de possibilité de coordination « temps réel » disponible dans ce cas. Un exemple de l'art antérieur est décrit dans EP 1 838 040

La présente invention a pour but de résoudre les inconvénients de l'art antérieur en proposant un procédé, un dispositif et un système de gestion des interférences générées par le fonctionnement simultané d'un réseau sans fil utilisant l'étalement de spectre par saut de fréquence et d'un réseau sans fil utilisant une technique d'étalement de spectre par deux dispositifs physiquement distincts et à proximité l'un de l'autre.

A cette fin, selon un premier aspect, l'invention propose un procédé de gestion des interférences générées par le fonctionnement simultané d'un réseau sans fil utilisant l'étalement de spectre par saut de fréquence et d'un réseau sans fil utilisant une technique d'étalement de spectre, un boîtier décodeur disposant d'un réseau sans fil utilisant l'étalement de spectre par saut de fréquence et étant connecté à une passerelle résidentielle disposant d'un réseau sans fil utilisant l'étalement de spectre par saut de fréquence et d'un réseau sans fil utilisant une technique d'étalement de spectre et étant apte à réduire les interférences générées par le fonctionnement simultané d'un réseau sans fil utilisant l'étalement de spectre par saut de fréquence et d'un réseau sans fil utilisant une technique d'étalement de spectre, caractérisé en ce que le procédé comporte les étapes de :
- transfert des paramètres utilisés dans le réseau sans fil utilisant l'étalement de spectre par saut de fréquence de la passerelle résidentielle au boîtier décodeur avec un décalage temporel pour une application, par le boîtier décodeur, des paramètres transférés et du décalage temporel, dans le réseau sans fil utilisant l'étalement de spectre par saut de fréquence du boîtier décodeur,
- détermination de la proximité du boîtier décodeur et de la passerelle résidentielle et dans l'affirmative :
- réception, par la passerelle résidentielle, des profils des périphériques connectés au réseau sans fil utilisant l'étalement de spectre par saut de fréquence du boîtier décodeur,
- transfert, par la passerelle résidentielle au boîtier décodeur, d'une commande d'une requête de correction temporelle,
- relais, par la passerelle résidentielle des informations échangées entre le boîtier décodeur et les périphériques connectés au réseau sans fil utilisant l'étalement de spectre par saut de fréquence du boîtier décodeur avant la désactivation du réseau sans fil utilisant l'étalement de spectre par saut de fréquence du boîtier décodeur.

L'invention concerne aussi un dispositif de gestion des interférences générées par le fonctionnement simultané d'un réseau sans fil utilisant l'étalement de spectre par saut de fréquence et d'un réseau sans fil utilisant une technique d'étalement de spectre, un boîtier décodeur disposant d'un réseau sans fil utilisant l'étalement de spectre par saut de fréquence et étant connecté à une passerelle résidentielle disposant d'un réseau sans fil utilisant l'étalement de spectre par saut de fréquence et d'un réseau sans fil utilisant une technique d'étalement de spectre et étant apte à réduire les interférences générées par le fonctionnement simultané d'un réseau sans fil utilisant l'étalement de spectre par saut de fréquence et d'un réseau sans fil utilisant une technique d'étalement de spectre, caractérisé en ce que le dispositif est compris dans la passerelle résidentielle et comporte :
- des moyens de transfert des paramètres utilisés dans le réseau sans fil utilisant l'étalement de spectre par saut de fréquence de la passerelle résidentielle au boîtier décodeur avec un décalage temporel pour une application, par le boîtier décodeur, des paramètres transférés et du décalage temporel, dans le réseau sans fil utilisant l'étalement de spectre par saut de fréquence du boîtier décodeur,
- des moyens de détermination de la proximité du boîtier décodeur et de la passerelle résidentielle et dans l'affirmative :
- des moyens de réception, par la passerelle résidentielle, des profils des périphériques connectés au réseau sans fil utilisant l'étalement de spectre par saut de fréquence du boîtier décodeur,
- des moyens de transfert, par la passerelle résidentielle au boîtier décodeur, d'une commande d'une requête de correction temporelle,
- des moyens de relais, par la passerelle résidentielle des informations échangées entre le boîtier décodeur et les périphériques connectés au réseau sans fil utilisant l'étalement de spectre par saut de fréquence du boîtier décodeur avant la désactivation du réseau sans fil utilisant l'étalement de spectre par saut de fréquence du boîtier décodeur.

L'invention concerne aussi un système de gestion des interférences générées par le fonctionnement simultané d'un réseau sans fil utilisant l'étalement de spectre par saut de fréquence et d'un réseau sans fil utilisant une technique d'étalement de spectre, un boîtier décodeur disposant d'un réseau sans fil utilisant l'étalement de spectre par saut de fréquence et étant connecté à une passerelle résidentielle disposant d'un réseau sans fil utilisant l'étalement de spectre par saut de fréquence et d'un réseau sans fil utilisant une technique d'étalement de spectre et étant apte à réduire les interférences générées par le fonctionnement simultané d'un réseau sans fil utilisant l'étalement de spectre par saut de fréquence et d'un réseau sans fil utilisant une technique d'étalement de spectre, caractérisé en ce que le système comporte :
- des moyens de transfert des paramètres utilisés dans le réseau sans fil utilisant l'étalement de spectre par saut de fréquence de la passerelle résidentielle au boîtier décodeur avec un décalage temporel pour une application, par le boîtier décodeur, des paramètres transférés et du décalage temporel, dans le réseau sans fil utilisant l'étalement de spectre par saut de fréquence du boîtier décodeur,
- des moyens de détermination de la proximité du boîtier décodeur et de la passerelle résidentielle et dans l'affirmative :
- des moyens de réception, par la passerelle résidentielle, des profils des périphériques connectés au réseau sans fil utilisant l'étalement de spectre par saut de fréquence du boîtier décodeur,
- des moyens de transfert, par la passerelle résidentielle au boîtier décodeur, d'une requête de correction temporelle,
- des moyens de transfert, par le boîtier décodeur, d'une information signalant aux périphériques connectés au réseau sans fil utilisant l'étalement de spectre par saut de fréquence du boîtier décodeur d'une application du décalage temporel dans le réseau sans fil utilisant l'étalement de spectre par saut de fréquence du boîtier décodeur,
- des moyens d'application des paramètres et du décalage temporel dans le réseau sans fil du boîtier décodeur utilisant l'étalement de spectre par saut de fréquence,
- des moyens de désactivation du réseau sans fil utilisant l'étalement de spectre par saut de fréquence du boîtier décodeur.
- des moyens de relais, par la passerelle résidentielle, des informations échangées entre le boîtier décodeur et les périphériques connectés au réseau sans fil utilisant l'étalement de spectre par saut de fréquence du boîtier décodeur avant la désactivation du réseau sans fil utilisant l'étalement de spectre par saut de fréquence du boîtier décodeur.

Ainsi, la passerelle est apte à réduire les interférences générées par le fonctionnement simultané d'un réseau sans fil utilisant l'étalement de spectre par saut de fréquence et d'un réseau sans fil utilisant une technique d'étalement de spectre de deux dispositifs physiquement distincts et reliés l'un à l'autre.

Selon un mode particulier de l'invention, le procédé comporte en outre les étapes de :
- transfert, par le boîtier décodeur, d'une information signalant aux périphériques connectés au réseau sans fil utilisant l'étalement de spectre par saut de fréquence du boîtier décodeur d'une application du décalage temporel dans le réseau sans fil utilisant l'étalement de spectre par saut de fréquence du boîtier décodeur,
- application des paramètres et du décalage temporel dans le réseau sans fil du boîtier décodeur utilisant l'étalement de spectre par saut de fréquence,
- désactivation du réseau sans fil utilisant l'étalement de spectre par saut de fréquence du boîtier décodeur.

Ainsi, les périphériques reliés au réseau sans fil utilisant l'étalement de spectre par saut de fréquence du boîtier décodeur passe sans interruption et sans procédure d'association du réseau sans fil utilisant l'étalement de spectre par saut de fréquence du boîtier décodeur au réseau sans fil utilisant l'étalement de spectre par saut de fréquence de la passerelle résidentielle.

Selon un mode particulier de l'invention, la détermination si le boîtier décodeur et la passerelle résidentielle sont à proximité est effectuée par une détection de la puissance des signaux radio reçus du boîtier décodeur et/ou par une estimation de la longueur d'un câble reliant le boîtier décodeur et la passerelle résidentielle et/ou par tentative de connexion au réseau du boîtier décodeur en utilisant des signaux à une puissance inférieure à une puissance nominale.

Ainsi, les périphériques reliés au réseau sans fil utilisant l'étalement de spectre par saut de fréquence du boîtier décodeur passent d'une manière fiable, sans interruption et sans procédure d'association du réseau sans fil utilisant l'étalement de spectre par saut de fréquence du boîtier décodeur au réseau sans fil utilisant l'étalement de spectre par saut de fréquence de la passerelle résidentielle.

Selon un mode particulier de l'invention, le procédé est exécuté avec une périodicité qui dépend du résultat de précédentes déterminations de la proximité du boîtier décodeur et de la passerelle résidentielle.

Ainsi, si la détection de proximité est négative un certain nombre consécutifs de fois, il est alors possible d'augmenter la fréquence de mise en route de la détection. Au contraire, si les positions du boîtier décodeur et de la passerelle résidentielle sont stables dans le temps, la fréquence de mise en route de la détection est réduite.

Selon un mode particulier de l'invention, le procédé comporte en outre les étapes de :
- qualification de la liaison entre la passerelle résidentielle et le boîtier décodeur,
- prise en compte de la qualification pour le relais par l'intermédiaire de la liaison qualifiée, par la passerelle résidentielle des informations échangées entre le boîtier décodeur et les périphériques connectés au réseau sans fil utilisant l'étalement de spectre par saut de fréquence du boîtier décodeur avant la désactivation du réseau sans fil utilisant l'étalement de spectre par saut de fréquence du boîtier décodeur.

Ainsi, le délai lié à la liaison et le temps nécessaire au fonctionnement en mode relai sont compensés.

Selon un mode particulier de l'invention, les réseaux sans fil utilisant l'étalement de spectre par saut de fréquence sont des réseaux de type Bluetooth et le réseau sans fil utilisant une technique d'étalement de spectre est un réseau de type Wi-Fi ou IEEE 802.11.

Selon un mode particulier de l'invention, le procédé est effectué périodiquement et le boîtier décodeur et la passerelle résidentielle ne sont plus à proximité et le procédé comporte en outre les étapes de :
- détermination des périphériques qui doivent appartenir au pico-réseau du boîtier décodeur,
- transfert au boîtier décodeur des profils de chaque périphérique qui doivent appartenir au pico-réseau du boîtier décodeur avec les paramètres utilisés dans le réseau sans fil utilisant l'étalement de spectre par saut de fréquence de la passerelle résidentielle,
- transfert, par la passerelle résidentielle au boîtier décodeur, d'une commande d'une requête de correction temporelle.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système résidentiel comportant un boîtier décodeur et une passerelle dans lequel la présente invention est implémentée ;
la Fig. 2 représente un boîtier décodeur selon la présente invention ;
la Fig. 3 représente une passerelle résidentielle selon la présente invention ;
la Fig. 4 représente un exemple d'algorithme, exécuté par la passerelle résidentielle de réduction des interférences liées à la transmission de données sur des liaisons sans fils conformes aux normes Bluetooth et Wi-Fi 2.4GHz ;
la Fig. 5 représente un exemple d'algorithme, exécuté par le boîtier décodeur, de réduction des interférences liées à la transmission de données sur des liaisons sans fil conformes aux normes Bluetooth et Wi-Fi 2.4GHz.

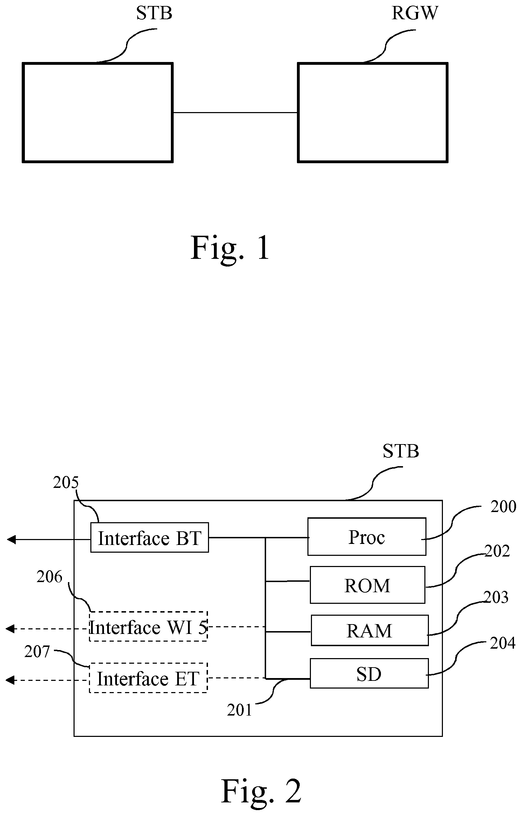

La **Fig. 1** représente un système résidentiel comportant un boîtier décodeur et une passerelle dans lequel la présente invention est implémentée.

Le boîtier décodeur STB (*Set Top Box* en anglais) est un dispositif apte à décoder des programmes audiovisuels et à les transférer à un ou plusieurs dispositifs audiovisuels tels qu'un téléviseur ou un système de reproduction audio. Les programmes audiovisuels sont par exemple reçus de la passerelle RGW (*Residential GateWay* en anglais).

Une pluralité de périphériques Bluetooth non représentés en Fig. 1 est susceptible d'être connectée au boîtier décodeur STB. Les périphériques Bluetooth peuvent se connecter pour former un réseau connu comme un pico-réseau (*piconet* en anglais) avec le boîtier décodeur STB agissant en tant que maître. Les périphériques peuvent simultanément fonctionner comme périphériques esclaves. Au maximum, huit périphériques Bluetooth actifs peuvent participer à un pico-réseau. Le temps est divisé en intervalles de 625µs dans le pico-réseau. Le maître et les esclaves peuvent alterner les transmissions selon le mode de répartition temporel. Le périphérique maître gère les liens et procédures de communication Bluetooth avec des esclaves dans le pico-réseau. Un esclave ne peut être activé pour émettre uniquement après avoir été interrogé par le maître.

Le boîtier décodeur STB comporte une interface de communication Bluetooth, et au moins une interface de communication avec la passerelle RGW, qui peut être du type Wi-Fi 5 GHz et/ou Ethernet par exemple.

La passerelle RGW assure les échanges avec un ou plusieurs réseaux de communication externes. Ces réseaux délivrent des programmes audiovisuels, assurent les communications téléphoniques, et la fourniture de services Internet. D'autres périphériques Bluetooth non représentés en Fig. 1 peuvent se connecter pour former un pico-réseau avec la passerelle RGW.

La passerelle RGW et le boîtier décodeur STB peuvent ou non être placés l'un à côté de l'autre. Bien souvent la passerelle RGW est disposée à proximité d'une liaison vers le ou les réseaux extérieurs et le boîtier décodeur STB est bien souvent placé à proximité du ou des dispositifs audiovisuels.

La passerelle RGW comporte une interface de communication Bluetooth, une interface de communication Wi-Fi 2.4 GHz, et au moins une interface de communication avec le boîtier décodeur STB, qui est du type Wi-Fi 5 GHz et/ou une Ethernet par exemple.

Selon la proximité de la passerelle RGW et du boîtier décodeur STB, des interférences entre les communications Bluetooth et Wi-Fi 2.4 GHz peuvent être atténuées selon la présente invention.

Selon la présente invention, la passerelle résidentielle RGW :
- transfère des paramètres utilisés dans le réseau sans fil utilisant l'étalement de spectre par saut de fréquence de la passerelle résidentielle au boîtier décodeur avec un décalage temporel pour une application, par le boîtier décodeur, des paramètres transférés et du décalage temporel, dans le réseau sans fil utilisant l'étalement de spectre par saut de fréquence du boîtier décodeur,
- détermine de la proximité du boîtier décodeur et de la passerelle résidentielle et dans l'affirmative :
- reçoit des profils des périphériques connectés au réseau sans fil utilisant l'étalement de spectre par saut de fréquence du boîtier décodeur,
- transfère, par la passerelle résidentielle au boîtier décodeur, d'une commande d'une requête de correction temporelle,
- relaie les informations échangées entre le boîtier décodeur et les périphériques connectés au réseau sans fil utilisant l'étalement de spectre par saut de fréquence du boîtier décodeur avant la désactivation du réseau sans fil utilisant l'étalement de spectre par saut de fréquence du boîtier décodeur.

La **Fig. 2** représente un boîtier décodeur selon la présente invention.

Le boîtier décodeur STB comprend :
- un processeur, micro-processeur, ou microcontrôleur 200 ;
- une mémoire volatile 203 ;
- une mémoire non volatile 202 ;
- éventuellement, un lecteur 204 de médium de stockage, tel qu'un lecteur de carte SD (*Secure Digital Card* en anglais ou *Carte Numérique Sécurisée* en français) ou un disque dur pour mémoriser les documents traités par la présente invention ;
- une interface 205 BT Bluetooth,
- une interface 206 WI 5 conforme à la norme Wi-Fi 5GHz, ou une interface 207 ET de type Ethernet,
- un bus de communication 201 reliant le processeur 200 à la mémoire ROM 203, à la mémoire RAM 203, au lecteur de médium de stockage 204 et à l'interface 205 et à l'interface 206 ou 207.

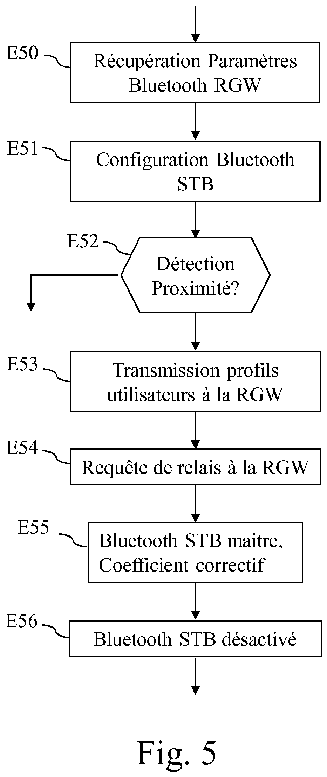

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le boîtier décodeur STB est mis sous tension, le processeur 200 est capable de lire de la mémoire volatile 203 des instructions et de les exécuter. Ces instructions forment un programme d'ordinateur qui cause la mise en oeuvre, par le processeur 200, de tout ou partie du procédé décrit en relation avec la Fig. 5.

Tout ou partie du procédé décrit en relation avec la Fig. 5 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

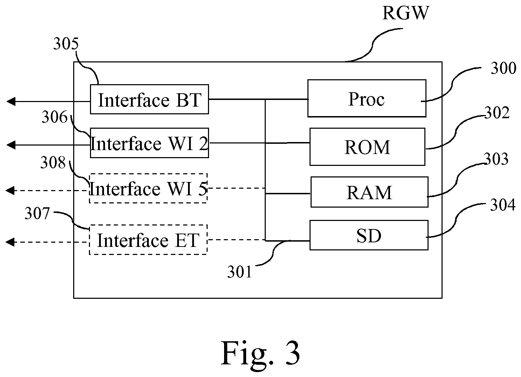

La **Fig. 3** représente une passerelle résidentielle selon la présente invention.

La passerelle résidentielle RGW comprend :
- un processeur, micro-processeur, ou microcontrôleur 300 ;
- une mémoire volatile 303 ;
- une mémoire non volatile 302;
- éventuellement, un lecteur 304 de médium de stockage, tel qu'un lecteur de carte SD (*Secure Digital Card* en anglais ou *Carte Numérique Sécurisée* en français) ou un disque dur pour mémoriser les documents traités par la présente invention ;
- une interface 305 BT Bluetooth,
- une interface 306 WI 2 conforme à la norme Wi-Fi 2.4 GHz,
- une interface 307 ET de type Ethernet et/ou une interface 308 WI 5 conforme à la norme Wi-Fi 5 GHz,
- un bus de communication 301 reliant le processeur 300 à la mémoire ROM 303, à la mémoire RAM 303, au lecteur de médium de stockage 304 et aux interfaces 305 à 308.

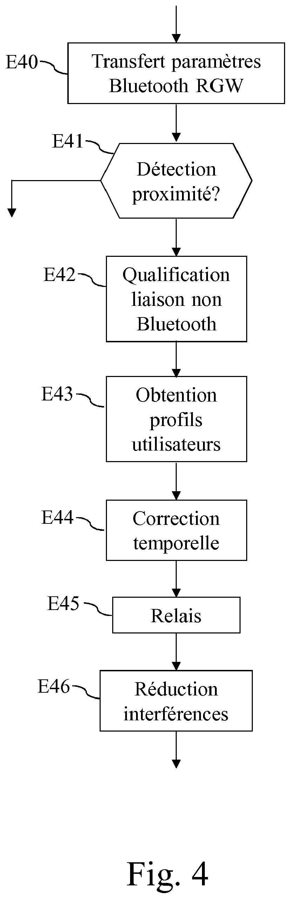

Le processeur 300 est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque la passerelle RGW est mise sous tension, le processeur 300 est capable de lire de la mémoire volatile 303 des instructions et de les exécuter. Ces instructions forment un programme d'ordinateur qui cause la mise en oeuvre, par le processeur 300, de tout ou partie du procédé décrit en relation avec la Fig. 4.

Tout ou partie du procédé décrit en relation avec la Fig. 4 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 4** représente un exemple d'algorithme, exécuté par la passerelle résidentielle, de réduction des interférences liées à la transmission de données sur des liaisons sans fil conformes aux normes Bluetooth et Wi-Fi 2.4GHz.

Plus précisément, le présent algorithme est exécuté par le processeur 300 de la passerelle résidentielle RGW en collaboration avec le processeur 200 du boîtier décodeur STB à travers les interfaces ET 307 et 207 et/ou WI 5 308 et 208.

Le présent algorithme est effectué à chaque mise sous tension de la passerelle RGW et/ou du boîtier décodeur STB et/ou à chaque réinitialisation des interfaces ET 307 et/ou ET 207 et/ou WI 5 308 et/ou WI 5 208. Les étapes du présent algorithme à partir de la détection de proximité (seuil) sont également effectuées périodiquement. Il est à remarquer que la périodicité de l'exécution du présent algorithme peut être variable et dépendre par exemple de précédentes variations ou non selon les résultats d'évaluation de la proximité de la passerelle résidentielle RGW avec le boîtier décodeur STB.

A l'étape E40, le processeur 300 commande le transfert des paramètres qui seront utilisés par l'interface Bluetooth BT 205 dans le pico réseau Bluetooth du boîtier décodeur STB. Le transfert est assuré par l'interface ET 307 ou WI 5 308. L'interface BT 205 du boîtier décodeur STB n'est alors pas active.

Le protocole Bluetooth utilise le saut de fréquence pour communiquer dans la bande ISM 2.4GHz avec un schéma de type maître/esclave. Le protocole Bluetooth partage la bande ISM 2.4GHz en 79 fréquences de communication ou canaux. Tous les intervalles de temps de 625µs, le canal de communication change de manière pseudo aléatoire parmi ces 79 canaux ou au minimum parmi 20 canaux en cas de saut adaptatif de fréquence AFH (acronyme du terme anglais *Adaptive Frequency Hoping*). La séquence de ces sauts de fréquences est essentiellement dérivée de l'adresse de l'équipement maître et de son horloge. L'horloge est composée de l'horloge interne de de la passerelle RGW ainsi que d'un coefficient correctif que seul le maître est autorisé à modifier.

Les valeurs utiles permettent une génération des sauts de fréquences identiques à ceux de la passerelle RGW et sont transférées au boîtier décodeur STB. Par exemple, les valeurs utiles sont l'adresse de l'équipement maître du pico réseau de la passerelle résidentielle RGW, son horloge interne et le coefficient correctif.

Un coefficient additionnel (*time*_*coex*_*offset*) est également transféré par la passerelle RGW au boîtier décodeur STB. Ce coefficient sera à additionner à l'horloge de l'interface BT 205 du boîtier décodeur STB.

Le coefficient additionnel est choisi de sorte qu'en communication, les sauts de fréquences de l'interface BT 205 du boîtier décodeur et de l'interface BT 305 de la passerelle RGW soient les mêmes mais décalés dans le temps d'au moins *N* ≥ 5 slots (5x625µs = 3.125ms).

Il est à remarquer ici que la valeur de *N* est choisie de manière à être supérieure à la durée maximale de transmission Bluetooth d'un paquet qui est de cinq intervalles de temps. La fréquence utilisée lors du premier intervalle de temps est conservée pour les intervalles de temps suivants et inférieurs à *N*. Les sauts de fréquences suivants reprennent alors ensuite comme s'ils avaient effectivement eu lieu durant la transmission.

Ainsi si la fréquence *f(k)* est utilisée à l'instant *t* par l'interface BT 305 passerelle résidentielle RGW, la même fréquence *f(k)* sera utilisée à l'instant *t*+*N**625µs par l'interface BT 205 du boîtier décodeur STB.

Il est à remarquer qu'en variante, cette étape n'est pas exécutée. Selon cette variante, le processeur 200 du boîtier décodeur STB configure l'interface Bluetooth BT 205 comme esclave du pico réseau Bluetooth dont la passerelle résidentielle RGW est le maître et obtient les paramètres utilisés par l'interface Bluetooth BT 305 de la passerelle résidentielle RGW dans le pico réseau Bluetooth dont la passerelle résidentielle RGW est le maître.

Il est à remarquer ici que la passerelle résidentielle et le boîtier décodeur ont alors la même séquence de sauts de fréquences, moyennant un décalage temporel. La passerelle résidentielle et le boîtier décodeur peuvent alors conserver leur propre identité de réseau.

L'interface BT 205 du boîtier décodeur STB peut alors être activée en tant que maître du pico réseau Bluetooth du boîtier décodeur STB et peut alors accepter l'ajout de périphériques et gérer leurs communications.

A l'étape E41, le processeur 300 commande une opération d'évaluation de la proximité de la passerelle résidentielle RGW avec le boîtier décodeur STB.

Par exemple, le processeur 300 commande l'interface BT 305, voire WI 5 308, de mesurer la puissance des signaux radio reçus du boîtier décodeur STB résidentiel. Connaissant la puissance émise d'une sonde de référence ou signal pilote, la mesure de la puissance du signal reçu, le processeur 300 évalue l'atténuation entre la passerelle résidentielle RGW et le boîtier décodeur STB.

Par exemple, le processeur 300 commande l'interface ET 307 d'activer des moyens d'estimation de la longueur du câble reliant le boîtier décodeur STB et la passerelle résidentielle RGW. Les moyens d'estimation de la longueur du câble sont classiquement utilisés à des fins de diagnostic de câble défaillant ou encore à des fins d'adaptation de puissance de transmission.

Par exemple, le processeur 300 commande l'interface BT 305 d'effectuer une tentative de connexion sans fil à l'une des interfaces sans fil du boîtier décodeur STB avec un signal ayant une puissance d'émission inférieure à celle classiquement utilisée.

Par exemple, le processeur 300 commande l'interface BT 305 de se connecter au pico réseau du boîtier décodeur STB en tant qu'esclave, commande l'interface WI 2 306 pour générer un signal et commande l'interface BT 305 pour mesurer la qualité effective de liaison Bluetooth BT en fonction d'une charge de l'interface Wi-Fi 2.4GHz.

Par exemple, le processeur 300 commande au processeur 200 de déterminer si les signaux émis par l'interface BT 205 du boîtier décodeur interfèrent avec les signaux émis par l'interface WI 306 de la passerelle résidentielle RGW.

Par exemple, si le processeur 300 a commandé l'interface BT 305, voire WI 5 308, de mesurer la puissance des signaux radio reçus du boîtier décodeur STB et si une atténuation de la sonde de référence ou signal pilote est inférieure à une valeur prédéterminée, par exemple 20dB, le processeur 300 décide que la passerelle résidentielle RGW et le boîtier décodeur STB sont proches et passe à l'étape E42.

Par exemple, si le processeur 300 a commandé l'interface ET 307 d'activer des moyens d'estimation de la longueur du câble reliant le boîtier décodeur STB et la passerelle résidentielle RGW et que le câble a une longueur inférieure à une valeur prédéterminée, par exemple un mètre, le processeur 300 décide que la passerelle résidentielle RGW et le boîtier décodeur STB sont proches et passe à l'étape E42.

Par exemple, si le processeur 300 a commandé l'interface BT 305 d'effectuer une tentative de connexion sans fil à l'une des interfaces sans fil du boîtier décodeur STB avec un signal ayant une puissance d'émission inférieure à une valeur prédéterminée, par exemple 20dB inférieure à celle classiquement utilisée, le processeur 300 décide que la passerelle résidentielle RGW et le boîtier décodeur STB sont proches et passe à l'étape E42.

Par exemple, si le processeur 300 a commandé l'interface WI 2 306 pour générer un signal, et l'interface BT 305 de se connecter au pico réseau du boîtier décodeur STB en tant qu'esclave et que la mesure de la qualité effective de liaison Bluetooth est supérieure à un seuil prédéterminé, par exemple la puissance du signal est supérieure à -50dBm, le processeur 300 décide que la passerelle résidentielle RGW et le boîtier décodeur STB sont proches et passe à l'étape E42.

Dans la négative, le processeur 300 décide que la passerelle résidentielle RGW et le boîtier décodeur STB ne sont pas proches et interrompt le présent algorithme.

A l'étape suivante E42, le processeur 300 qualifie, par l'intermédiaire de l'interface WI 5 308 ou l'interface ET 307, les performances de la liaison entre la passerelle résidentielle RGW et le boîtier décodeur STB. Le processeur 300 obtient par exemple le délai, la gigue, les erreurs. Il est à remarquer ici que cette étape est facultative ou est avant le déclenchement du présent algorithme.

A l'étape E43, le processeur 300 obtient les profils de chaque périphérique appartenant au pico réseau du boîtier décodeur STB par l'intermédiaire de la liaison entre la passerelle résidentielle RGW et le boîtier décodeur STB. Le processeur 300 obtient les profils et information d'appairage des périphériques appartenant au pico réseau du boîtier décodeur STB. Il est à remarquer que cette étape peut, en variante, être effectuée au fur et à mesure de l'appartenance de nouveaux périphériques au pico réseau du boîtier décodeur STB.

A l'étape E44, le processeur 300 commande le transfert au boîtier décodeur STB d'une requête de correction temporelle de l'interface BT 205 d'un facteur de correction temporelle *-time*_*coex*_*offset*, la correction devant être achevée à un instant donné qui peut être prédéterminé, par exemple de quelques secondes après l'émission de ladite requête de correction temporelle, ou passé en paramètre de ladite requête de correction temporelle (*time_shit_instant*).

La correction temporelle peut se faire soit de manière directe en utilisant par exemple la procédure telle que décrite dans la section §8.6.10.2 (Coarse Clock Adjustment Recovery Mode), soit de manière graduée en utilisant la procédure telle que décrite dans la section §8.6.10.3 (Clock Dragging) des spécifications Bluetooth (« Spécification of the Bluetooth® system », « vol2: Core System Package [BR/EDR Controller volume] », Part B, version 4.1, December, 3 2013). En effet, les procédures susmentionnées garantissent que les périphériques appartenant au pico réseau du boîtier décodeur STB n'auront pas besoin de se ré appairer une fois la correction temporelle complétée. A l'instant de la fin de la correction temporelle, les sauts de fréquences de l'interface BT 205 du boîtier décodeur STB et de l'interface BT 305 de la passerelle résidentielle RGW sont alignés.

Il est à remarquer ici qu'après la correction temporelle, l'interface BT 305 de la passerelle résidentielle RGW répond comme si elle était l'interface BT 205 du boîtier décodeur STB à tout message à destination du pico réseau du boîtier décodeur STB.

A l'étape suivante E45, qui a lieu à la fin de la correction temporelle, l'interface BT 205 du boîtier décodeur est désactivée et le processeur 300 commande l'interface BT 305 ainsi que l'interface utilisée pour la liaison avec le boîtier décodeur pour relayer les informations échangées entre les périphériques appartenant précédemment au pico réseau du boîtier décodeur STB et le boîtier STB. Il est à remarquer ici que les informations échangées sont transférées en prenant en compte la latence liée à la redirection des informations échangées et en fonction du profil du périphérique émetteur ou destinataire.

A l'étape E46, le processeur 300 commande les interfaces BT305 et WI 2 306 pour procéder à une réduction en temps réel des interférences entre les communications Wi-Fi et Bluetooth. Par exemple, une isolation temporelle et/ou fréquentielle et/ou spatiale est effectuée.

Il est à remarquer ici que l'évaluation et la décision de la proximité de la passerelle résidentielle RGW avec le boîtier décodeur STB sont effectuées par le processeur 300 de la passerelle résidentielle RGW à l'étape E41. En variante, l'évaluation et la décision de la proximité de la passerelle résidentielle RGW avec le boîtier décodeur STB sont effectuées par le processeur 200 du boîtier décodeur STB.

La **Fig. 5** représente un exemple d'algorithme, exécuté par le boîtier décodeur, de réduction des interférences liées à la transmission de données sur des liaisons sans fil conformes aux normes Bluetooth et Wi-Fi 2.4GHz.

Plus précisément, le présent algorithme est exécuté par le processeur 200 du boîtier décodeur STB en collaboration avec le processeur 300 du boîtier décodeur RGW à travers les interfaces ET 307 et 207 et/ou WI 5 308 et 208.

Le présent algorithme est effectué à chaque mise sous tension du boîtier décodeur STB et/ou à chaque réinitialisation des interfaces ET 307 et/ou ET 207 et/ou WI 5 308 et/ou WI 208. Les étapes du présent algorithme, à partir de la détection de proximité, sont également effectuées périodiquement. Il est à remarquer que la périodicité de l'exécution du présent algorithme peut être variable et dépendre par exemple de précédentes variations ou non selon les résultats d'évaluation de la proximité de la passerelle résidentielle RGW avec le boîtier décodeur STB.

A l'étape E50, le processeur 200 commande la récupération par l'intermédiaire de l'interface ET 207 ou WI 5 206, des paramètres qui seront utilisés par l'interface BT 205 du boîtier décodeur STB. Ces paramètres doivent permettre une génération des sauts de fréquences identiques à ceux de la passerelle RGW.

Il est à remarquer qu'en variante, le processeur 200 configure l'interface Bluetooth BT 205 comme esclave du pico réseau Bluetooth dont la passerelle résidentielle RGW est le maître et obtient les moyens de générer à l'identique les sauts de fréquences utilisés par l'interface Bluetooth BT 305 de la passerelle résidentielle RGW dans le pico réseau Bluetooth dont la passerelle résidentielle RGW est le maître.

A l'étape E51, le processeur 200 configure l'interface Bluetooth BT 205 comme maître du pico réseau du boîtier décodeur STB en utilisant les mêmes sauts de fréquences que ceux utilisés dans le pico réseau ou la RGW, mais décalé dans le temps d'un coefficient additionnel (*time*_*coex*_*offset*).

Le coefficient additionnel est choisi de sorte qu'en communication, les sauts de fréquences de l'interface BT 205 du boîtier décodeur et de l'interface BT 305 de la passerelle RGW soient les mêmes mais décalés dans le temps d'au moins *N* ≥ 5 slots (5x625µs = 3.125ms).

Il est à remarquer ici que la passerelle résidentielle et le boîtier décodeur ont alors la même séquence de sauts de fréquences, moyennant un décalage temporel. La passerelle résidentielle et le boîtier décodeur peuvent alors conserver leur propre identité de réseau.

Si l'évaluation et la décision de la proximité de la proximité de la passerelle résidentielle RGW avec le boîtier décodeur STB sont effectuées par la passerelle résidentielle RGW, le processeur 200 passe de l'étape E51 à E53 si le résultat de la détection de proximité par la RGW est positif. Dans le cas où l'évaluation et la décision de la proximité de la proximité de la passerelle résidentielle RGW avec le boîtier décodeur STB sont effectuées par le boîtier décodeur STB, le processeur 200 passe de l'étape E51 à E52.

A l'étape E52, le processeur 200 évalue et décide de la proximité de la passerelle résidentielle RGW avec le boîtier décodeur STB de la même manière que celle décrite à l'étape E41 de la Fig. 4. Dans le cas d'une détection de proximité positive, le processeur 200 passe de l'étape E52 à E53.

A l'étape E53, le processeur 200 commande le transfert des profils de chaque périphérique appartenant au pico réseau du boîtier décodeur STB à la passerelle résidentielle RGW par l'intermédiaire de la liaison entre la passerelle résidentielle RGW et le boîtier décodeur STB. Le processeur 200 transfère les profils et information d'appairage des périphériques appartenant au pico réseau du boîtier décodeur STB. Il est à remarquer que cette étape peut, en variante, être effectuée au fur et à mesure de l'appartenance de nouveaux périphériques au pico réseau du boîtier décodeur STB.

A l'étape E54, le processeur 200 envoie une requête de relais à la passerelle résidentielle RGW lui indiquant que l'interface BT 305 de la passerelle résidentielle devra prendre le relais de l'interface BT 205 du boîtier décodeur STB. Cette information permet la détermination d'un instant donné (*time_shift_instant*) à partir duquel l'interface BT 305 de la passerelle résidentielle doit répondre comme si elle était l'interface BT 205 du boîtier décodeur STB à tout message à destination du pico réseau du boîtier décodeur STB. Cette instant peut être soit prédéfini, par exemple quelques secondes après l'envoi de ladite requête, soit inclus dans ladite requête.

A l'étape suivante E55, le processeur 200 commande le transfert par le biais de l'interface BT 205 d'une information signalant aux périphériques connectés au réseau sans fil utilisant l'étalement de spectre par saut de fréquence du boîtier décodeur STB qu'un décalage temporel va avoir lieu dans la séquence des sauts de fréquences, de sorte qu'à l'instant donné *time_shit_instant* le décalage temporel effectué dans le saut de fréquence sera de *-time_coex_offset*.

Il est à remarquer ici qu'après le décalage temporel, la passerelle résidentielle RGW répond comme si elle était le boîtier décodeur STB à tout message à destination de la STB.

A l'étape suivante E56, l'interface BT 205 du boîtier décodeur STB est désactivée et le processeur 200 commande l'interface utilisée pour la liaison avec la passerelle résidentielle RGW pour relayer les informations échangées entre les périphériques appartenant précédemment au pico réseau du boîtier décodeur STB et le boîtier décodeur STB. Il est à remarquer ici que les informations échangées sont transférées en prenant en compte la latence liée à la redirection des informations échangées par la liaison entre la passerelle résidentielle RGW et le boîtier décodeur STB, dont les performances pourront être qualifiées de la même manière qu'à l'étape E42 et en fonction du profil du périphérique émetteur ou destinataire.

Il est à remarquer ici, lorsque l'interface BT 205 du boîtier décodeur STB est désactivée et qu'un redémarrage du boîtier décodeur STB est effectué, que l'interface BT 205 est réactivée en tant que maître d'un pico réseau en utilisant les paramètres obtenus à l'étape E51. Les profils et informations d'appairage des périphériques nouvellement compris dans le pico réseau dont l'interface Bluetooth 305 de la passerelle résidentielle RGW sont transférés au boîtier décodeur STB.

Ces informations permettent d'identifier le type de périphériques qui avaient vocation à s'associer au pico réseau dont le boîtier décodeur STB était le maître à l'étape E53.

Il est à remarquer ici que si lors d'une itération de l'algorithme de la Fig. 4 ou 5, le processeur 300, respectivement 200, détermine à l'étape E41, respectivement E52, que le boîtier décodeur STB et la passerelle résidentielle RGW ne sont plus à proximité, c'est-à-dire que l'interface BT 205 du boîtier décodeur STB est désactivée, le processeur 300 de la passerelle résidentielle RGW, respectivement 200 du boîtier décodeur STB, commande le transfert des profils de chaque périphérique qui lui semble légitime d'appartenir au pico réseau du boîtier décodeur STB par l'intermédiaire de la liaison entre la passerelle résidentielle RGW et le boîtier décodeur STB. A partir des informations, le processeur 300 identifie les différents types d'équipements et détermine s'ils ont à vocation à s'associer au pico-réseau du boîtier décodeur STB.

Il est à remarquer que cette étape peut, en variante, être effectuée au fur et à mesure de l'appartenance de nouveaux périphériques au pico réseau de la passerelle résidentielle.

Le processeur 300, respectivement 200, transfère une commande au boîtier décodeur lui demandant d'activer l'interface BT 205 du boîtier décodeur STB avec les paramètres obtenus lors de l'étape E40, respectivement E50, à un instant *time_unshift_instant*.

Le processeur 300 commande alors aux périphériques communiquant avec l'interface BT 305 mais pensant être sur le pico réseau du boîtier décodeur STB une requête de correction temporelle d'un facteur *-time*_*coex_offset* qui sera effectif à l'instant *time_unshift_instant* afin que lesdits périphériques soient récupérés par l'interface BT 205 du boîtier décodeur STB lorsque cette dernière sera réactivée.

## Revendications

1. Procédé de gestion des interférences générées par le fonctionnement simultané d'un réseau sans fil utilisant l'étalement de spectre par saut de fréquence et d'un réseau sans fil utilisant une technique d'étalement de spectre, un boîtier décodeur disposant d'un réseau sans fil utilisant l'étalement de spectre par saut de fréquence et étant connecté à une passerelle résidentielle disposant d'un réseau sans fil utilisant l'étalement de spectre par saut de fréquence et d'un réseau sans fil utilisant une technique d'étalement de spectre et étant apte à réduire les interférences générées par le fonctionnement simultané d'un réseau sans fil utilisant l'étalement de spectre par saut de fréquence et d'un réseau sans fil utilisant une technique d'étalement de spectre, **caractérisé en ce que** le procédé comporte les étapes de :
- transfert (E40) des paramètres utilisés dans le réseau sans fil utilisant l'étalement de spectre par saut de fréquence de la passerelle résidentielle au boîtier décodeur avec un décalage temporel pour une application, par le boîtier décodeur, des paramètres transférés et du décalage temporel, dans le réseau sans fil utilisant l'étalement de spectre par saut de fréquence du boîtier décodeur,
- détermination (E41) de la proximité du boîtier décodeur et de la passerelle résidentielle et dans l'affirmative :
- réception (E43), par la passerelle résidentielle, des profils des périphériques connectés au réseau sans fil utilisant l'étalement de spectre par saut de fréquence du boîtier décodeur,
- transfert (E44), par la passerelle résidentielle au boîtier décodeur, d'une commande d'une requête de correction temporelle,
- relais (E45), par la passerelle résidentielle des informations échangées entre le boîtier décodeur et les périphériques connectés au réseau sans fil utilisant l'étalement de spectre par saut de fréquence du boîtier décodeur avant la désactivation du réseau sans fil utilisant l'étalement de spectre par saut de fréquence du boîtier décodeur.

2. Procédé selon la revendication 1, **caractérisé en ce que** le procédé comporte en outre les étapes de :
- transfert, par le boîtier décodeur, d'une information signalant aux périphériques connectés au réseau sans fil utilisant l'étalement de spectre par saut de fréquence du boîtier décodeur d'une application du décalage temporel dans le réseau sans fil utilisant l'étalement de spectre par saut de fréquence du boîtier décodeur,
- application des paramètres et du décalage temporel dans le réseau sans fil du boîtier décodeur utilisant l'étalement de spectre par saut de fréquence,
- désactivation du réseau sans fil utilisant l'étalement de spectre par saut de fréquence du boîtier décodeur.

3. Procédé selon l'une quelconque des revendications 1 à 2, **caractérisé en ce que** la détermination si le boîtier décodeur et la passerelle résidentielle sont à proximité est effectuée par une détection de la puissance des signaux radio reçus du boîtier décodeur et/ou par une estimation de la longueur d'un câble reliant le boîtier décodeur et la passerelle résidentielle et/ou par tentative de connexion au réseau du boîtier décodeur en utilisant des signaux à une puissance inférieure à une puissance nominale.

4. Procédé selon l'une quelconque des revendications 1 à 3, **caractérisé en ce que** le procédé est exécuté avec une périodicité qui dépend du résultat de précédentes détermination de la proximité du boîtier décodeur et de la passerelle résidentielle.

5. Procédé selon l'une quelconque des revendications 1 à 4, **caractérisé en ce que** le procédé comporte en outre les étapes de :
- qualification de la liaison entre la passerelle résidentielle et le boîtier décodeur,
- prise en compte de la qualification pour le relais par l'intermédiaire de la liaison qualifiée, par la passerelle résidentielle des informations échangées entre le boîtier décodeur et les périphériques connectés au réseau sans fil utilisant l'étalement de spectre par saut de fréquence du boîtier décodeur avant la désactivation du réseau sans fil utilisant l'étalement de spectre par saut de fréquence du boîtier décodeur.

6. Procédé selon l'une quelconque des revendications 1 à 5, **caractérisé en ce que** les réseaux sans fil utilisant l'étalement de spectre par saut de fréquence sont des réseaux de type Bluetooth et le réseau sans fil utilisant une technique d'étalement de spectre est un réseau de type Wi-Fi ou IEEE 802.11.

7. Procédé selon l'une quelconque des revendications précédentes, **caractérisé en ce que** le procédé est effectué périodiquement et si le boîtier décodeur et la passerelle résidentielle ne sont plus à proximité, le procédé comporte en outre les étapes de :
- détermination des périphériques qui doivent appartenir au pico-réseau du boîtier décodeur,
- transfert au boîtier décodeur des profils de chaque périphérique qui doivent appartenir au pico-réseau du boîtier décodeur avec les paramètres utilisés dans le réseau sans fil utilisant l'étalement de spectre par saut de fréquence de la passerelle résidentielle,
- transfert, par la passerelle résidentielle au boîtier décodeur, d'une commande d'une requête de correction temporelle.

8. Dispositif de gestion des interférences générées par le fonctionnement simultané d'un réseau sans fil utilisant l'étalement de spectre par saut de fréquence et d'un réseau sans fil utilisant une technique d'étalement de spectre, un boîtier décodeur disposant d'un réseau sans fil utilisant l'étalement de spectre par saut de fréquence et étant connecté à une passerelle résidentielle disposant d'un réseau sans fil utilisant l'étalement de spectre par saut de fréquence et d'un réseau sans fil utilisant une technique d'étalement de spectre et étant apte à réduire les interférences générées par le fonctionnement simultané d'un réseau sans fil utilisant l'étalement de spectre par saut de fréquence et d'un réseau sans fil utilisant une technique d'étalement de spectre, **caractérisé en ce que** le dispositif est compris dans la passerelle résidentielle et comporte :
- des moyens de transfert des paramètres utilisés dans le réseau sans fil utilisant l'étalement de spectre par saut de fréquence de la passerelle résidentielle au boîtier décodeur avec un décalage temporel pour une application, par le boîtier décodeur, des paramètres transférés et du décalage temporel, dans le réseau sans fil utilisant l'étalement de spectre par saut de fréquence du boîtier décodeur,
- des moyens de détermination de la proximité du boîtier décodeur et de la passerelle résidentielle et dans l'affirmative :
- des moyens de réception, par la passerelle résidentielle, des profils des périphériques connectés au réseau sans fil utilisant l'étalement de spectre par saut de fréquence du boîtier décodeur,
- des moyens de transfert, par la passerelle résidentielle au boîtier décodeur, d'une commande d'une requête de correction temporelle,
- des moyens de relais, par la passerelle résidentielle, des informations échangées entre le boîtier décodeur et les périphériques connectés au réseau sans fil utilisant l'étalement de spectre par saut de fréquence du boîtier décodeur avant la désactivation du réseau sans fil utilisant l'étalement de spectre par saut de fréquence du boîtier décodeur.

9. Système de gestion des interférences générées par le fonctionnement simultané d'un réseau sans fil utilisant l'étalement de spectre par saut de fréquence et d'un réseau sans fil utilisant une technique d'étalement de spectre, un boîtier décodeur disposant d'un réseau sans fil utilisant l'étalement de spectre par saut de fréquence et étant connecté à une passerelle résidentielle disposant d'un réseau sans fil utilisant l'étalement de spectre par saut de fréquence et d'un réseau sans fil utilisant une technique d'étalement de spectre et étant apte à réduire les interférences générées par le fonctionnement simultané d'un réseau sans fil utilisant l'étalement de spectre par saut de fréquence et d'un réseau sans fil utilisant une technique d'étalement de spectre, **caractérisé en ce que** le système comporte :
- des moyens de transfert des paramètres utilisés dans le réseau sans fil utilisant l'étalement de spectre par saut de fréquence de la passerelle résidentielle au boîtier décodeur avec un décalage temporel pour une application, par le boîtier décodeur, des paramètres transférés et du décalage temporel, dans le réseau sans fil utilisant l'étalement de spectre par saut de fréquence du boîtier décodeur,
- des moyens de détermination de la proximité du boîtier décodeur et de la passerelle résidentielle et dans l'affirmative :
- des moyens de réception, par la passerelle résidentielle, des profils des périphériques connectés au réseau sans fil utilisant l'étalement de spectre par saut de fréquence du boîtier décodeur,
- des moyens de transfert, par la passerelle résidentielle au boîtier décodeur, d'une requête de correction temporelle,
- des moyens de transfert, par le boîtier décodeur, d'une information signalant aux périphériques connectés au réseau sans fil utilisant l'étalement de spectre par saut de fréquence du boîtier décodeur d'une application du décalage temporel dans le réseau sans fil utilisant l'étalement de spectre par saut de fréquence du boîtier décodeur,
- des moyens d'application des paramètres et du décalage temporel dans le réseau sans fil du boîtier décodeur utilisant l'étalement de spectre par saut de fréquence,
- des moyens de désactivation du réseau sans fil utilisant l'étalement de spectre par saut de fréquence du boîtier décodeur,
- des moyens de relais, par la passerelle résidentielle, des informations échangées entre le boîtier décodeur et les périphériques connectés au réseau sans fil utilisant l'étalement de spectre par saut de fréquence du boîtier décodeur avant la désactivation du réseau sans fil utilisant l'étalement de spectre par saut de fréquence du boîtier décodeur.

10. Programme d'ordinateur, **caractérisé en ce qu'**il comprend des instructions pour mettre en oeuvre, par un système, le procédé selon l'une quelconque des revendications 1 à 7, lorsque ledit programme est exécuté par un processeur du système.

11. Moyens de stockage, **caractérisés en ce qu'**ils stockent un programme d'ordinateur comprenant des instructions pour mettre en oeuvre, par un système, le procédé selon l'une quelconque des revendications 1 à 7, lorsque ledit programme est exécuté par un processeur dudit système.

## Patentansprüche

1. Verfahren zur Verwaltung der Interferenzen, die durch den gleichzeitigen Betrieb eines drahtlosen Netzwerks, das Spektrumspreizung durch Frequenzsprung nutzt, und eines drahtlosen Netzwerks, das eine Spektrumspreizungstechnik nutzt, erzeugt werden, wobei eine Set-Top-Box über ein drahtloses Netzwerk verfügt, das Frequenzsprung-Spektrumspreizung nutzt und mit einem Residential Gateway verbunden ist, das über ein drahtloses Netzwerk verfügt, das Frequenzsprung-Spektrumspreizung nutzt, und über ein drahtloses Netzwerk, das eine Spektrumspreizungstechnik nutzt und in der Lage ist, die Interferenzen zu verringern, die von dem gleichzeitigen Betrieb eines drahtlosen Netzwerks, das Frequenzsprung-Spektrumspreizung nutzt, und eines drahtlosen Netzwerks, das eine Spektrumspreizungstechnik nutzt, erzeugt werden, **dadurch gekennzeichnet, dass** das Verfahren die folgenden Schritte umfasst:
- Übergabe (E40) der Parameter, die in dem drahtlosen Netzwerk genutzt werden, das Frequenzsprung-Spektrumspreizung nutzt, von dem Residential Gateway an die Set-Top-Box mit einem Zeitversatz für eine Anwendung, durch die Set-Top-Box, der übertragenen Parameter und des Zeitversatzes in dem drahtlosen Netzwerk der Set-Top-Box, das Frequenzsprung-Spektrumspreizung nutzt,
- Ermittlung (E41) der Nähe der Set-Top-Box und des Residential Gateways, und wenn ja:
- Empfang (E43), durch das Residential Gateway, der Profile der Peripheriegeräte, die mit dem drahtlosen Netzwerk der Set-Top-Box verbunden sind, das Frequenzsprung-Spektrumspreizung nutzt,
- Übergabe (E44), durch das Residential Gateway an die Set-Top-Box, eines Befehls einer Anforderung einer zeitlichen Korrektur,
- Weitergabe (E45), durch das Residential Gateway, der Informationen, die zwischen der Set-Top-Box und den Peripheriegeräten ausgetauscht werden, die mit dem drahtlosen Netzwerk der Set-Top-Box verbunden sind, das Frequenzsprung-Spektrumspreizung nutzt, vor der Deaktivierung des drahtlosen Netzwerks der Set-Top-Box, das Frequenzsprung-Spektrumspreizung nutzt.

2. Verfahren nach Anspruch 1, **dadurch gekennzeichnet, dass** das Verfahren ferner die folgenden Schritte umfasst:
- Übergabe, durch die Set-Top-Box, einer Information, die den Peripheriegeräten, die mit dem drahtlosen Netzwerk der Set-Top-Box verbunden sind, das Frequenzsprung-Spektrumspreizung nutzt, einer Anwendung des Zeitversatzes in dem drahtlosen Netzwerk der Set-Top-Box, das Frequenzsprung-Spektrumspreizung nutzt, meldet,
- Anwendung der Parameter und des Zeitversatzes in dem drahtlosen Netzwerk der Set-Top-Box, die Frequenzsprung-Spektrumspreizung nutzt,
- Deaktivierung des drahtlosen Netzwerks der Set-Top-Box, das Frequenzsprung-Spektrumspreizung nutzt.

3. Verfahren nach einem der Ansprüche 1 bis 2, **dadurch gekennzeichnet, dass** die Ermittlung, ob sich die Set-Top-Box und der Residential Gateway in der Nähe befinden, durch eine Erkennung der Leistung der Funksignale, die von der Set-Top-Box empfangen werden, und/oder durch eine Schätzung der Länge eines Kabels, das die Set-Top-Box und das Residential Gateway verbindet, und/oder durch einen Versuch einer Verbindung mit dem Netzwerk der Set-Top-Box unter Zuhilfenahme von Signalen mit einer Leistung, die geringer als eine Nennleistung ist, durchgeführt wird.

4. Verfahren nach einem der Ansprüche 1 bis 3, **dadurch gekennzeichnet, dass** das Verfahren mit einer Periodizität durchgeführt wird, die von dem Ergebnis voriger Ermittlung der Nähe der Set-Top-Box und des Residential Gateways abhängt.

5. Verfahren nach einem der Ansprüche 1 bis 4, **dadurch gekennzeichnet, dass** das Verfahren ferner die folgenden Schritte umfasst:
- Qualifizierung der Verbindung zwischen dem Residential Gateway und der Set-Top-Box,
- Berücksichtigung der Qualifizierung für die Weitergabe, durch die qualifizierte Verbindung, durch das Residential Gateway, der Informationen, die zwischen der Set-Top-Box und den Peripheriegeräten ausgetauscht werden, die mit dem drahtlosen Netzwerk der Set-Top-Box verbunden sind, das Frequenzsprung-Spektrumspreizung nutzt, vor der Deaktivierung des drahtlosen Netzwerks der Set-Top-Box, das Frequenzsprung-Spektrumspreizung nutzt.

6. Verfahren nach einem der Ansprüche 1 bis 5, **dadurch gekennzeichnet, dass** die drahtlosen Netzwerke, die Frequenzsprung-Spektrumspreizung nutzen, Netzwerke des Bluetooth-Typs sind und das drahtlose Netzwerk, das eine Spektrumspreizungstechnik nutzt, ein Netzwerk des Typs Wi-Fi oder IEEE 802.11 ist.

7. Verfahren nach einem der vorhergehenden Ansprüche, **dadurch gekennzeichnet, dass** das Verfahren periodisch durchgeführt wird, und, wenn sich die Set-Top-Box und der Residential Gateway nicht mehr in der Nähe befinden, das Verfahren ferner die folgenden Schritte umfasst:
- Ermittlung der Peripheriegeräte, die zu dem Pico-Netzwerk der Set-Top-Box gehören sollen,
- Übergabe, an die Set-Top-Box, der Profile jedes Peripheriegeräts, die zu dem Pico-Netzwerk der Set-Top-Box gehören sollen, mit den Parametern, die in dem drahtlosen Netzwerk des Residential Gateways genutzt werden, das Frequenzsprung-Spektrumspreizung nutzt,
- Übergabe, durch das Residential Gateway an die Set-Top-Box, eines Befehls einer Anforderung einer zeitlichen Korrektur.

8. Vorrichtung zur Verwaltung der Interferenzen, die durch den gleichzeitigen Betrieb eines drahtlosen Netzwerks, das Spektrumspreizung durch Frequenzsprung nutzt, und eines drahtlosen Netzwerks, das eine Spektrumspreizungstechnik nutzt, erzeugt werden, wobei eine Set-Top-Box über ein drahtloses Netzwerk verfügt, das Frequenzsprung-Spektrumspreizung nutzt und mit einem Residential Gateway verbunden ist, der über ein drahtloses Netzwerk verfügt, das Frequenzsprung-Spektrumspreizung nutzt, und über ein drahtloses Netzwerk, das eine Spektrumspreizungstechnik nutzt und in der Lage ist, die Interferenzen zu verringern, die von dem gleichzeitigen Betrieb eines drahtlosen Netzwerks, das Frequenzsprung-Spektrumspreizung nutzt, und eines drahtlosen Netzwerks, das eine Spektrumspreizungstechnik nutzt, erzeugt werden, **dadurch gekennzeichnet, dass** die Vorrichtung in dem Residential Gateway enthalten ist und Folgendes umfasst:
- Mittel zur Übergabe der Parameter, die in dem drahtlosen Netzwerk genutzt werden, das Frequenzsprung-Spektrumspreizung nutzt, von dem Residential Gateway an die Set-Top-Box mit einem Zeitversatz für eine Anwendung, durch die Set-Top-Box, der übertragenen Parameter und des Zeitversatzes in dem drahtlosen Netzwerk der Set-Top-Box, das Frequenzsprung-Spektrumspreizung nutzt,
- Mittel zur Ermittlung der Nähe der Set-Top-Box und des Residential Gateways, und wenn ja:
- Mittel zum Empfang, durch das Residential Gateway, der Profile der Peripheriegeräte, die mit dem drahtlosen Netzwerk der Set-Top-Box verbunden sind, das Frequenzsprung-Spektrumspreizung nutzt,
- Mittel zur Übergabe, durch das Residential Gateway an die Set-Top-Box, eines Befehls einer Anforderung einer zeitlichen Korrektur,
- Mittel zur Weitergabe, durch das Residential Gateway, der Informationen, die zwischen der Set-Top-Box und den Peripheriegeräten ausgetauscht werden, die mit dem drahtlosen Netzwerk der Set-Top-Box verbunden sind, das Frequenzsprung-Spektrumspreizung nutzt, vor der Deaktivierung des drahtlosen Netzwerks der Set-Top-Box, das Frequenzsprung-Spektrumspreizung nutzt.

9. System zur Verwaltung der Interferenzen, die durch den gleichzeitigen Betrieb eines drahtlosen Netzwerks, das Spektrumspreizung durch Frequenzsprung nutzt, und eines drahtlosen Netzwerks, das eine Spektrumspreizungstechnik nutzt, erzeugt werden, wobei eine Set-Top-Box über ein drahtloses Netzwerk verfügt, das Frequenzsprung-Spektrumspreizung nutzt und mit einem Residential Gateway verbunden ist, das über ein drahtloses Netzwerk verfügt, das Frequenzsprung-Spektrumspreizung nutzt, und über ein drahtloses Netzwerk, das eine Spektrumspreizungstechnik nutzt und in der Lage ist, die Interferenzen zu verringern, die von dem gleichzeitigen Betrieb eines drahtlosen Netzwerks, das Frequenzsprung-Spektrumspreizung nutzt, und eines drahtlosen Netzwerks, das eine Spektrumspreizungstechnik nutzt, erzeugt werden, **dadurch gekennzeichnet, dass** das System Folgendes umfasst:
- Mittel zur Übergabe der Parameter, die in dem drahtlosen Netzwerk genutzt werden, das Frequenzsprung-Spektrumspreizung nutzt, von dem Residential Gateway an die Set-Top-Box mit einem Zeitversatz für eine Anwendung, durch die Set-Top-Box, der übertragenen Parameter und des Zeitversatzes in dem drahtlosen Netzwerk der Set-Top-Box, das Frequenzsprung-Spektrumspreizung nutzt,
- Mittel zur Ermittlung der Nähe der Set-Top-Box und des Residential Gateways, und wenn ja:
- Mittel zum Empfang, durch das Residential Gateway, der Profile der Peripheriegeräte, die mit dem drahtlosen Netzwerk der Set-Top-Box verbunden sind, das Frequenzsprung-Spektrumspreizung nutzt,
- Mittel zur Übergabe, durch das Residential Gateway an die Set-Top-Box, einer Anforderung einer zeitlichen Korrektur,
- Mittel zur Übergabe, durch die Set-Top-Box, einer Information, die den Peripheriegeräten, die mit dem drahtlosen Netzwerk der Set-Top-Box verbunden sind, das Frequenzsprung-Spektrumspreizung nutzt, einer Anwendung des Zeitversatzes in dem drahtlosen Netzwerk der Set-Top-Box, das Frequenzsprung-Spektrumspreizung nutzt, meldet,
- Mittel zur Anwendung der Parameter und des Zeitversatzes in dem drahtlosen Netzwerk der Set-Top-Box, die Frequenzsprung-Spektrumspreizung nutzt,
- Mittel zur Deaktivierung des drahtlosen Netzwerks der Set-Top-Box, das Frequenzsprung-Spektrumspreizung nutzt,
- Mittel zur Weitergabe, durch das Residential Gateway, der Informationen, die zwischen der Set-Top-Box und den Peripheriegeräten ausgetauscht werden, die mit dem drahtlosen Netzwerk der Set-Top-Box verbunden sind, das Frequenzsprung-Spektrumspreizung nutzt, vor der Deaktivierung des drahtlosen Netzwerks der Set-Top-Box, das Frequenzsprung-Spektrumspreizung nutzt.

10. Computerprogramm, **dadurch gekennzeichnet, dass** es Anweisungen umfasst, um durch ein System das Verfahren nach einem der Ansprüche 1 bis 7 durchzuführen, wenn das Programm von einem Prozessor des Systems ausgeführt wird.

11. Speichermittel, **dadurch gekennzeichnet, dass** sie ein Computerprogramm speichern, das Anweisungen umfasst, um durch ein System das Verfahren nach einem der Ansprüche 1 bis 7 durchzuführen, wenn das Programm von einem Prozessor des Systems ausgeführt wird.

## Claims

1. Method for managing interference generated by the simultaneous operation of a wireless network using frequency-hopping spread spectrum and a wireless network using a spread spectrum technique, a set-top box having a wireless network using frequency-hopping spread spectrum and being connected to a residential gateway having a wireless network using frequency-hopping spread spectrum and a wireless network using a spread spectrum technique and being able to reduce the interference generated by the simultaneous operation of a wireless network using frequency-hopping spread spectrum and a wireless network using a spread spectrum technique, **characterised in that** the method comprises the steps of:
- transferring (E40) parameters used in the wireless network using the frequency-hopping spread spectrum of the residential gateway to the set-top box with an time offset for an application, by the set-top box, of the transferred parameters and of the time offset, in the wireless network using the frequency-hopping spread spectrum of the set-top box,
- determining (E41) whether the set-top box and the residential gateway are close to each other and, in the affirmative:
- receiving (E43), by the residential gateway, of the profiles of the peripherals connected to the wireless network using the frequency-hopping spread spectrum of the set-top box,
- transferring (E44), by the residential gateway to the set-top box, of a command of temporal correction request,
- relaying (E45), by the residential gateway, of the information exchanged between the set-top box and the peripherals connected to the wireless network using the frequency-hopping spread spectrum of the set-top box before the deactivation of the wireless network using the frequency-hopping spread spectrum of the set-top box.

2. Method according to claim 1, **characterised in that** the method further comprises the steps of:
- transferring, by the set-top box, of information indicating to the peripherals connected to the wireless network using the frequency-hopping spread spectrum of the set-top box of an application of time offset in the wireless network using the frequency-hopping spread spectrum of the set-top box,
- applying the parameters and of the time offset in the wireless network of the set-top box using frequency-hopping spread spectrum,
- deactivating the wireless network using the frequency-hopping spread spectrum of the set-top box.

3. Method according to either claim 1 or claim 2, **characterised in that** the determination whether the set-top box and the residential gateway are close to each other is done by detecting the power of the radio signals received from the set-top box and/or by an estimation of the length of a cable connecting the set-top box and the residential gateway and/or by an attempt at connection to the network of the set-top box using signals at a power below a nominal power.

4. Method according to any of claims 1 to 3, **characterised in that** the method is executed with a periodicity that depends on the result of the previous determinations of the proximity of the set-top box and residential gateway.

5. Method according to any of claims 1 to 4, **characterised in that** the method further comprises the steps of:
- qualifying the connection between the residential gateway and the set-top box,
- taking into account the qualification for the relay, through the qualified connection, by the residential gateway, of the information exchanged between the set-top box and the peripherals connected to the wireless network using the frequency-hopping spread spectrum of the set-top box before deactivating the wireless network using the frequency-hopping spread spectrum of the set-top box.

6. Method according to any of claims 1 to 7, **characterised in that** the wireless networks using frequency-hopping spread spectrum are s of Bluetooth type networks and the wireless network using a spread spectrum technique is a Wi-Fi or IEEE 802.11 network 802.11 type.

7. Method according to any of the preceding claims, **characterised in that** the method is executed periodically and the set-top box and residential gateway are no longer close, and the method further comprises the steps of:
- determining the peripherals that must belong to the pico network of the set-top box,
- transferring to the set-top box the profiles of each peripheral that must belong to the pico network of the set-top box with the parameters used in the wireless network using the frequency-hopping spread spectrum of the residential gateway,
- transferring, by the residential gateway to the set-top box, of a command temporal correction request command.

8. Device for managing interference generated by the simultaneous operation of a wireless network using frequency-hopping spread spectrum and a wireless network using a spread spectrum technique, a set-top box having a wireless network using frequency-hopping spread spectrum and being connected to a residential gateway having a wireless network using frequency-hopping spread spectrum and a wireless network using a spread spectrum technique and being able to reduce the interference generated by the simultaneous operation of a wireless network using frequency-hopping spread spectrum and a wireless network using a spread spectrum technique, **characterised in that** the device is included in the residential gateway and comprises:
- means for transferring parameters used in the wireless network using the frequency-hopping spread spectrum of the residential gateway to the set-top box together with a time for an application, by the set-top box, of the transferred parameters and of the time offset, in the wireless network using the frequency-hopping spread spectrum of the set-top box,
- means for determining whether the set-top box and the residential gateway are close to each other and, in the affirmative:
- means for receiving, by the residential gateway, the profiles of the peripherals connected to the wireless network using the frequency-hopping spread spectrum of the set-top box,
- means for transferring, by the residential gateway to the set-top box, of a temporal correction request command,
- means for the relaying, by the residential gateway, of the information exchanged between the set-top box and the peripherals connected to the wireless network using the frequency-hopping spread spectrum of the set-top box before the deactivation of the wireless network using the frequency-hopping spread spectrum of the set-top box.

9. System for managing interference generated by the simultaneous operation of a wireless network using frequency-hopping spread spectrum and a wireless network using a spread spectrum technique, a set-top box having a wireless network using frequency-hopping spread spectrum and being connected to a residential gateway having a wireless network using frequency-hopping spread spectrum and a wireless network using a spread spectrum technique and being able to reduce the interference generated by the simultaneous operation of a wireless network using frequency-hopping spread spectrum and a wireless network using a spread spectrum technique, **characterised in that** the system comprises:
- means for transferring parameters used in the wireless network using the frequency-hopping spread spectrum of the residential gateway to the set-top box with a time offset for an application, by the set-top box, of the transferred parameters and of the time offset, in the wireless network using the frequency-hopping spread spectrum of the set-top box,
- means for determining whether the set-top box and the residential gateway are close to each other and, in the affirmative:
- means for receiving, by the residential gateway, the profiles of the peripherals connected to the wireless network using the frequency-hopping spread spectrum of the set-top box,
- means for transferring, by the residential gateway to the set-top box, a temporal correction request,
- means for the transfer, by the set-top box, of information indicating, to the peripherals connected to the wireless network using the frequency-hopping spread spectrum of the set-top box, an application of time offset in the wireless network using the frequency-hopping spread spectrum of the set-top box,
- means for applying the parameters and the time offset in the wireless network of the set-top box using frequency-hopping spread spectrum,
- means for deactivating the wireless network using the frequency-hopping spread spectrum of the set-top box,
- means for relaying, by the residential gateway, of the information exchanged between the set-top box and the peripherals connected to the wireless network using the frequency-hopping spread spectrum of the set-top box before the deactivation of the wireless network using the frequency-hopping spread spectrum of the set-top box.

10. Computer program, **characterized in that** it comprises instructions for implementing, by a system, the method according to any one of claims 1 to 7, when said program is executed by a processor of the system.

11. Storage means, **characterized in that** they store a computer program comprising instructions for implementing, by a system, the method according to any one of claims 1 to 7
